# EUROPEAN PATENT SPECIFICATION

(11) **EP 4 489 590 B1**
(45) Date of publication and mention of the grant of the patent: **10.09.2025**
(21) Application number: 24703233.7
(22) Date of filing: 10.01.2024
(51) Int. Cl.: A23N 15/10, A01F 11/04

(54) **METHOD FOR THE DECORTICATION OF DRY OBLONG LEGUMES, AS WELL AS USE OF A PEELER TO DECORTICATE OBLONG LEGUMES AND LINE FOR THE DECORTICATION OF DRY OBLONG LEGUMES**
VERFAHREN ZUM SCHÄLEN VON LÄNGLICHEN TROCKENEN LEGUMINOSEN, SOWIE VERWENDUNG EINES SCHÄLERS ZUM SCHÄLEN LÄNGLICHER LEGUMINOSEN UND LINIE ZUM SCHÄLEN LÄNGLICHER TROCKENER LEGUMINOSE
PROCEDE POUR LA DECORTICATION DES LEGUMINEUSES OBLONGS SECS, AINSI QUE L'UTILISATION D'UN EPLUCHEUR POUR LA DECORTICATION DES LEGUMINEUSES OBLONGS SECS ET LIGNE POUR LA DECORTICATION DES LEGUMINEUSES OBLONGS SECS

(30) Priority: 13.01.2023 IT 202300000435
(43) Date of publication of application: 15.01.2025
(73) Proprietor: Casillo, Angelo, 80040 Terzigno (NA) (IT); Casillo, Gennaro, 80040 Terzigno (NA) (IT)
(72) Inventor: Casillo, Angelo, 80040 Terzigno (NA) (IT); Casillo, Gennaro, 80040 Terzigno (NA) (IT)
(74) Representative: Autuori & Partners S.R.L.
(86) International application number: PCT/IB2024/050238
(87) International publication number: WO 2024/150147

(56) References cited:
- WO-A1-2012/077017
- AU-B2- 566 776
- CN-A- 112 137 141
- CN-B- 101 828 591
- JP-A- 2007 202 406
- US-A- 3 487 838

## Description

### Technical field of invention

The present invention generally relates to the technical field of the agri-food industry and more specifically the technical field of processing legumes, dried fruits and cereals. Specifically, the invention relates to a method for the decortication of dry oblong legumes, a *software* for the implementation of the method mentioned above, the use of a peeler for decorticating the oblong legumes and a line for the decortication of dry oblong legumes.

### Definitions

In the present document, the expression "decortication" and derivatives, in this specific case referring to legumes, is used to indicate a process for the manual, automatic or semi-automatic mechanical removal of the integument of the legume, that is the external peel thereof, to obtain the internal seed. Actually, the integument contains most of the carbohydrates and fibres that are difficult to digest for the bowel and which therefore entail the disorders at the intestinal level, especially in children during the weaning thereof.

### State of the Art

In general, the process for decorticating legumes, such as for example chickpeas, lentils, beans and the like, may be carried out both manually and automatically or semiautomatically using suitable industrial machines.

In the former case, manual decortication is generally carried out by previously soaking the dry legumes to be decorticated in water, usually at room temperature, usually for a very long period of time (from 12 to 24 hours approximately).

Actually, this contributes to softening the external integument of the legume which, once the aforementioned soaking time has elapsed, may be easily removed manually to obtain a decorticated legume.

Despite being very common, especially in the domestic environment, this process is clearly disadvantageous to replicate in an industrial environment and for the purposes of large-scale distribution, given its poor practicability and the fact that it is highly time consuming.

On the other hand, in the industrial case, dry legumes to be decorticated are directly introduced into special industrial machines, called "decorticators" which actually remove the integument mechanically.

Generally, such machines have a working chamber with a rotary screening drum which receives - in input - a precise batch of legumes to be treated and which, through the rotary movement thereof, allows the latter to impact against a central shelling stone which mechanically removes the integument. The peel thus removed is therefore suctioned to allow to obtain the decorticated end product.

However, due to their configuration, the machines are not versatile and they are very disadvantageous especially in the case of legumes that are not strictly spherical, such as for example beans, lupins, broad beans and the like, in this specific case characterised by a typical eccentric and oblong configuration.

Therefore, in such cases, the decorticated end product is usually jeopardised, and therefore this results in significant waste product.

As a matter of fact, the oblong legumes decorticated with such machines tend to easily break and be ruined with a significant impact on the inherent quality of the end product thus treated.

Lastly, the removal of the integument is neither complete nor optimal, therefore affecting the organoleptic qualities of the product.

Document CN101828591 discloses a process for decorticating beans according to the preamble of the independent claim 1 which envisages the pretreatment thereof and the subsequent decortication.

Document US3487838 discloses a mechanical peeling machine for removing peas from the relative pod. Such machine includes a working chamber having a rotary cone with flexible blades suitable to interact with a fixed counter-cone provided with pod abutment elements. The rotation axis of the cone is vertical, same case applying to the direction of fall of the pods in the working chamber.

### Summary of the invention

An object of the present invention is to at least partly overcome the drawbacks illustrated above by providing a method for the decortication of dry oblong legumes.

Another object of the present invention is to at least partly overcome the drawbacks illustrated above, by providing a method for the decortication of dry oblong legumes which minimises waste.

A further object of the present invention is to at least partly overcome the drawbacks illustrated above, by providing a method that allows to minimise the damage to the decorticated end product.

A further object of the present invention is to at least partly overcome the drawbacks illustrated above by providing a method that allows to maximise the quality of the decorticated end product.

Another object of the present invention is to at least partly overcome the drawbacks illustrated above, by providing a method for the decortication of dry oblong legumes that is easy to implement industrially.

Another object of the present invention is to provide a method for the decortication of dry oblong legumes that allows to minimise the decortication times.

A further object of the invention is to provide a line for the decortication of legumes that is particularly quick and functional.

These and other objects which will be more apparent hereinafter, are attained by a method for the decortication of dry oblong legumes, a line for the decortication of dry oblong legumes and by the use of a peeler for decorticating legumes according respectively to claims 1, 13 and 14.

Furthermore, the dependent claims define advantageous embodiments of the invention.

### Brief description of the drawings

Further characteristics and advantages of the invention will be more apparent in the light of the detailed description of a preferred but non-exclusive embodiment of the invention shown by way of non-limiting example with reference to the attached drawings, wherein:
**FIG. 1** shows a front schematic view of the line **1** for the decortication of oblong dry legumes;

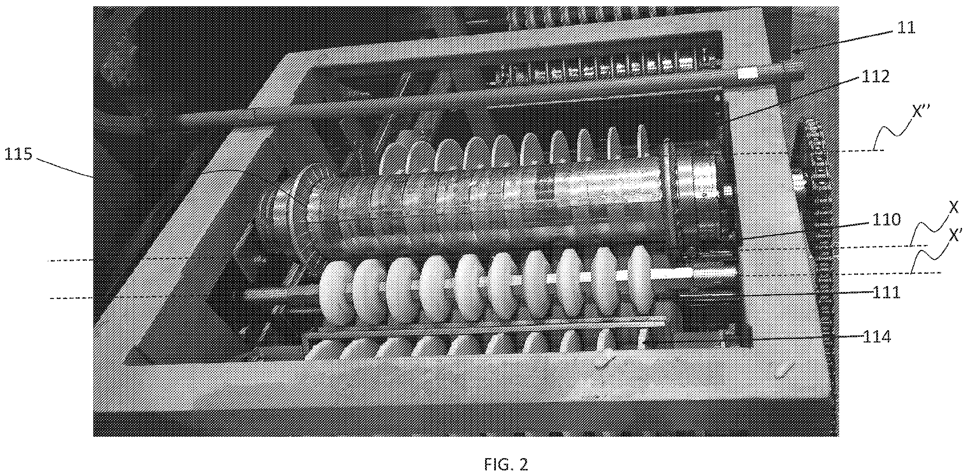

**FIG. 2** shows a top view of the peeler **11** in the line **1;**

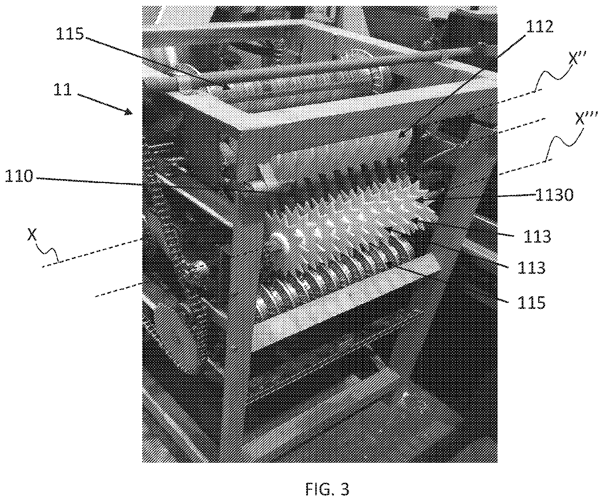

**FIG. 3** shows a rear view of the peeler **11** in the line **1;**

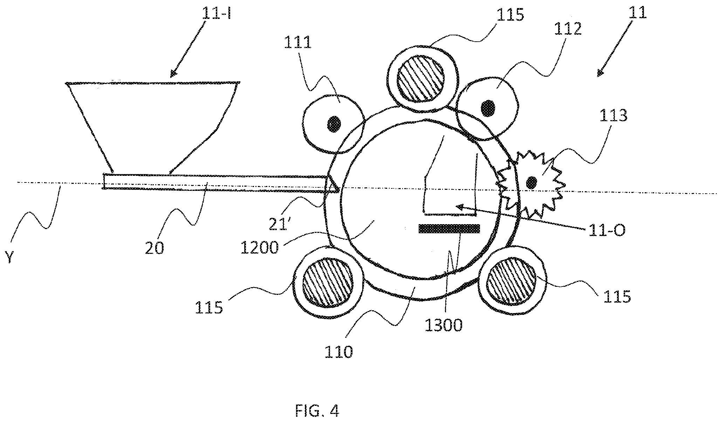

**FIG. 4** shows a diagram of the main components of the peeler **11** in the line **1;**

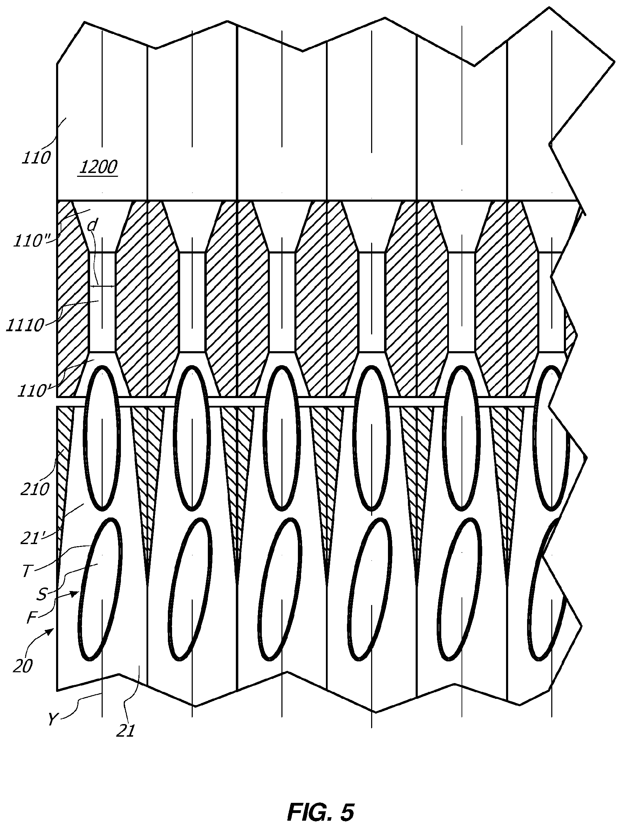

**FIG. 5** shows a top schematic view of some parts of a peeler **11.**

### Detailed description of some preferred embodiments of the invention

With reference to the aforementioned figures, first and foremost, herein described is a method for the decortication of dry oblong legumes **F.**

In this specific case, the method described herein may prove to be particularly effective for legumes such as beans, lupins, broad beans and the like.

It is clear that, although the present invention exclusively focuses on such type of legumes, the implementation of the method in question also for other types of legumes, for example substantially spherical legumes such as chickpeas, peas or the like, cannot be ruled out.

Generally, the decortication of legumes is particularly significant both in terms of industrialising processes and in terms of large-scale distribution, especially focusing on baby food.

In this latter case, the decorticated legumes actually represent a major foodstuff which can be administered to children during weaning, with the aim of meeting the needs of the children without introducing an excessive amount of fibres that could be potentially harmful to the same.

First and foremost, the decortication method according to the invention includes a step of pre-treating the dry oblong legumes **F** to be decorticated.

Preferably, the dry oblong legumes **F** to be pre-treated and to be decorticated may be of a single type, for example a single batch of beans. However, it is clear that there may also be provided for one or more mixes of oblong legumes of different type, should there arise the need, without departing from the scope of protection of the attached claims.

Furthermore, the dry oblong legumes **F** may be pre-treated and decorticated "by batches", that is a predetermined amount, so that the pre-treated batch can be decorticated consecutively, as will also be detailed hereinafter.

In addition, in the present description, it was opted to make specific reference to a batch solely consisting of beans **F** to be decorticated through the method described herein. However, it is clear that the choice shall not be deemed to be limited thereto in any manner whatsoever and the same reasoning may also equally apply to different oblong legumes, without departing from the scope of protection of the attached claims.

Specifically, according to a particularly advantageous aspect of the invention, the aforementioned pretreatment step may provide for submerging dry beans **F** in a vat **10** containing an appropriate pretreatment liquid, for example water.

As described in greater detail also hereinafter, the submersion of the dry beans **F** may actually allow to soak them partially.

In other words, the pretreatment time and temperature may be selected so that only the integument **T** absorbs the pretreatment liquid, leaving the internal seed **S** dry. In this manner, the subsequent mechanical decortication step will allow to easily remove the integument **T** without jeopardising the wholeness of the internal seed **S.**

In greater detail, the container **10** may preferably have a coating made of conductive material within it, for example made of metal material, and it has a thermally insulating material with respect to the external, so as to minimise heat dispersion towards the external environment.

Although in the present invention particular reference will be made to a single pretreatment container **10,** it is however clear that there may also be provided for two or more containers **10** which work parallel, without departing from the scope of protection of the attached claims.

To this end, the container **10** may have been previously filled - during a filling step - with the pretreatment liquid.

Preferably, the pretreatment liquid may be water. However, it is clear that any other type of pretreatment liquid may be used.

As a matter of fact, there may also be used one or more pretreatment liquids combined differently, such as for example aquafaba and/or aqueous solutions of different type, without departing from the scope of protection of the attached claims.

Subsequently to the filling step, there may be provided for a step of heating the pretreatment liquid in the container.

To this end, in a first embodiment not shown in the attached figures, the container **10** may provide for the presence of a plurality of resistors which can be selectively activated through an electronic control so as to allow to heat the internal coating of the container **10.**

By so doing, the generated heat may be transmitted by convection to the pretreatment liquid, so as to bring it to a predetermined pretreatment temperature.

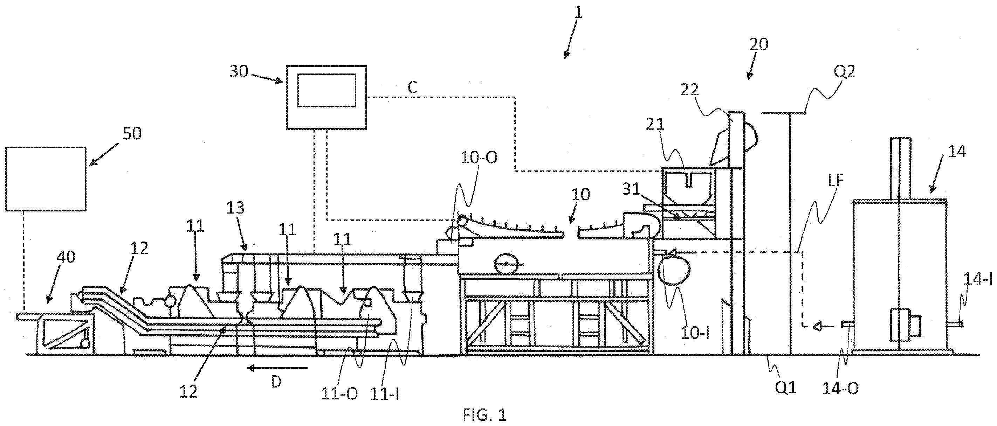

In a second preferred embodiment, shown in **FIG. 1****,** there may instead be provided for a steam generator **14** operatively connected with the container **10** through a fluidic line **LF** adapted to allow the through-flow of steam generated by the former **14** and directed towards the latter **10.**

The steam generator **14** may therefore have an inlet **14-I** so as to allow the inlet of water and an outlet **14-O** to allow the outflow of steam intended for the container **10** instead.

The fluidic line **LF** may therefore extend from the outlet **14-O** up to a special inlet **10-I** of the container **10** so as to allow to transfer the generated steam up to the latter.

The steam introduced at the inlet **10-I** may further allow to heat the pretreatment liquid present in the container **10** to the predetermined pretreatment temperature.

Preferably, the latter may be comprised between 40°C and 95°C, preferably between 70°C and 90°C, even more preferably between 75°C and 85°C.

Depending on the selected pretreatment liquid and the volume of the container **10,** the heating step may clearly use different times: after a transient, the temperature of the pretreatment liquid may therefore be substantially uniform and equal to the predetermined pretreatment temperature, so as to allow to subsequently pre-treat the dry beans homogeneously and excellently.

Once the pretreatment liquid has reached the predetermined pretreatment temperature, there may therefore be carried out the step of inserting the dry beans **F** to be treated into the container **10.**

The introduction may be manual or, preferably, it may be automatic / semi-automatic.

In this latter case, for example be there may be provided for a hopper **21** respectively downstream of a specific automated handling line (automatic case) or which can be supplied by manually inserting the dry beans to be pre-treated (semi-automatic case).

In any case, once the beans **F** have been inserted into the container **10,** the pretreatment step may be carried out by partially soaking the latter in the container **10.**

In greater detail, according to a further advantageous aspect of the invention, the soaking may be carried out for a predetermined pretreatment time, so as to obtain beans **F** soaked on the surface only exclusively at the integument **T.**

The pretreatment time, may preferably be comprised between 1 and 10 minutes, preferably between 1 and 7 minutes, even more preferably between 2 and 5 minutes.

In any case, the recommended pretreatment time may be less than 10 minutes: as a matter of fact, beyond this value there is the risk that besides the integument **T,** the internal seed **S** be also soaked with the selected pretreatment liquid.

Furthermore, there is the risk that the beans **F** end up cooked, with the resulting risk of jeopardising the subsequent decortication step, as well as any subsequent processing operations.

For example, the step of pre-treating the dry beans **F** may be carried out at a temperature between 40°C and 95°C for a period of time between 1 and 10 minutes or at a temperature between 70°C and 90°C for a period of time between 1 and 7 minutes or at a temperature between 75°C and 85°C for a period of time between 2 and 5 minutes.

According to a preferred embodiment of the invention, the step of pre-treating dry beans **F** may be carried out at 80°C for 3 minutes.

It is clear that, during the pretreatment step, there may also be provided for different values as well as combinations of the pretreatment temperature and of the pretreatment time: in general, the pretreatment step may therefore be carried out independently at a different pretreatment temperature (or possibly at a precise sequence of different pretreatment temperatures) and for a pretreatment time different from the example mentioned above, depending on the specific case, without departing from the scope of protection of the attached claims.

As the main effect resulting from the selected values reported above, the beans **F** may advantageously be soaked on the surface alone.

In other words, the external integument **T** alone may be soaked, therefore keeping the internal seed **S** of the pre-treated bean **F** dry.

Therefore, the pretreatment step mentioned above may allow to make the decortication step not only significantly faster, but it is also characterised by greater final yield.

In other words, due to the fact that the internal seed **S** will remain substantially dry, the decortication may therefore be optimal and uniform, therefore allowing to significantly reduce the percentage of jeopardised product, and therefore waste, exiting from the peeler.

Subsequently, once the aforementioned predetermined pretreatment time has elapsed, there may be carried out the step of emptying the container **10** so as to allow the removal of the beans **F** soaked on the surface from the outlet **10-O** of the container **10** and the movement thereof towards the peeler **11.**

At this point, once removed from the container **10,** the beans **F** soaked on the surface, there may be carried out the decortication step so as to obtain - in output - a batch of decorticated beans **F.**

The decortication step is carried out using a peeler **11.**

Possibly, the decortication step may also be carried out using a plurality of peelers **11** configured to operate parallel, without departing from the scope of protection of the attached claims.

First and foremost, the peeler **11** may include conveying means, for example an inlet hopper **11-I** which may adjust the inflow of the beans **F** entering the peeler **11** and which may be connected with a vibrating conveyor belt **20.**

The latter may include a plurality of supply channels **21** defining advancement directions **Y** of the legumes **F** and the vibration thereof may allow to arrange the pre-treated beans **F** in a row along the supply channels **21** mentioned above and allow the latter to advance towards the decortication means of the peeler **11.**

The peeler **11** includes one or more pairs of annular dragging elements **110** which rotate coaxially, in use, around the axis **X,** which may be substantially perpendicular to the axis **Y**.

According to a preferred but non-exclusive embodiment, they may be made of polymeric or elastomeric material, for example rubber or the like. However, it is clear that other types of materials may also be used, without departing from the scope of protection of the attached claims.

Preferably, the material of the annular dragging elements **110** may have a high coefficient of friction so as to allow the dragging and/or decortication of the legumes **F,** as better explained below.

Besides being coaxial and mutually parallel, the annular dragging elements **110** of each pair are positioned at a predetermined distance **d.**

The latter may for example be comprised between 1 cm and 5 cm, preferably between 1 cm and 3 cm.

Even more preferably, such predetermined distance **d** may for example be 2 cm.

It is clear that, if need be, different values may also be taken into account for the predetermined distance mentioned above, without departing from the scope of protection of the attached claims.

In this sense, two by two they define a work area **1110** interposed between the annular dragging elements **110.**

Therefore, each work area may be connected with a respective supply channel **21** of the vibrating conveyor belt **20** and therefore receive - in input - pre-treated beans **F** to be decorticated.

In a preferred but non-exclusive embodiment, the final part **21'** of each supply channel **20** may have a relatively high slope to define a chute towards the work area **1110** of the annular dragging elements **110.** Furthermore, a guide element **210** may preferably be provided for, so that the one legume enters into the work areas **1110** one at a time.

Furthermore, the annular dragging elements **110** may all have an inlet area **110'** with shape converging towards the work area **1110,** for example a flared portion, so as to facilitate the entry of the legumes **F** thereinto. Preferably, furthermore, the annular dragging elements **110** may all have an outlet area **110"** diverging towards the inner area **1200,** for example another flared portion, so as to facilitate the exit of the internal seed **S.**

In particular, the legumes **F** which advance in a row along the supply channels **21** of the vibrating conveyor belt **20** will push the end legume into the relative work area **1110** interposed between the annular dragging elements **110.**

If the integument **T** is thoroughly soaked and therefore particularly fragile, the separation between the integument **T** and the internal seed **S** may be carried out by friction once the legume **F** comes into contact with the annular dragging elements **110.**

Suitably, suitable elements adapted to remove the integument **T** may also be provided for, as better explained below.

Abutment means are provided configured to interact with the legume **F** dragged by the annular dragging elements **110** into the work area **1110,** so as to promote the mutual separation of the integument **T** and of the internal seed **S** (in particular, if the separation does not occur by friction between the legume and the annular dragging elements **110,** as described above) and/or the exit of the latter from the work area.

Therefore, the peeler **11** may include one or more disc-shaped elements **111** rotating around an axis **X'** substantially parallel to the axis **X.**

Preferably, the latter may be rotary in the same direction as the annular dragging elements **110.** However, it is clear that they may also be possibly configured to be counterrotating, if need be.

It is clear that the one or more disc-shaped elements **111** may be motor-driven or idle, without departing from the scope of protection of the attached claims. In this latter case, the rotation may for example occur due to the friction of the disc-shaped elements **111** with the annular dragging elements **110.**

Furthermore, the axes **X** and **X'** may be suitably spaced apart so as to allow the disc-shaped elements **111** to be partially inserted into the respective work area **1110.**

The portion of the disc-shaped elements **111** interposed between the annular dragging elements **110** may therefore cooperate with the latter so as to allow the mechanical decortication of the beans **F** to be decorticated.

According to a preferred but non-exclusive embodiment, the disc-shaped elements **111** may be made of polymeric material, for example rubber or the like. However, it is clear that they may also be made of different material, without departing from the scope of protection of the attached claims.

However, the use of polymers such as rubber, characterised by a high coefficient of friction, may allow to easily and rapidly carry out the removal of the integument **T** from the bean **F.**

Furthermore, the disc-shaped elements **111** may have a substantially oval cross-section, that is with two convex opposite faces.

Due to the sizing thereof, the rotary cooperation between the one or more disc-shaped elements **111** and the respective annular dragging elements **110,** may therefore allow to remove the integument **T** from the internal seed **S,** both due to the pressure and the friction which is generated between the faces of the disc-shaped elements **111** and of the annular dragging elements **110** upon interaction with the outer surface of the bean **F.**

Such choice may actually allow to significantly facilitate the removal of the integument **T,** which ones soaked and softened through the pretreatment step mentioned above will be particularly easy to remove, without entailing jeopardising the treated oblong legumes, as it instead happens in the industrial machines of the prior art which use an abrasive drum to remove the integument.

In the case of the present invention, this problem can be overcome by simulating the movement carried out by the fingers typical of manual decortication or peeling.

Furthermore, the peeler **11** may include another plurality of disc-shaped elements **112** which rotate coaxially around an axis **X"** substantially parallel to the axis **X** and configured to allow the removal of the seeds from the respective work area.

Actually, each disc-shaped element **112** will be partially inserted between two annular dragging elements **110** therefore to intercept the internal seeds **S** and direct them towards the outlet hopper **11-O**, positioned in the area **1200** inside the annular dragging elements **110.**

The beans **F** which will be in the respective work areas **1110** during the decortication step, may therefore define a maximum travel angle defined with respect to the geometric centre of the annular dragging elements **110** and between the inlet of the latter and the aforementioned disc-shaped elements **112,** comprised between 90° and 125°, more preferably between 100° and 120°, even more preferably 105° and 115°.

The internal seed **S** may therefore be collected in the outlet hopper **11-O**, while the integument **T** may be removed for example by suctioning. A conveyor belt **1300** for moving the internal seeds **S** laterally to the peeler **11** may be possibly provided for. Suitably, the conveyor belt **1300** may define an advancement direction of the internal seeds **S** substantially perpendicular to the axis **Y** and substantially parallel to the axes **X, X'.**

It is clear that the abutment means may be of any type, not necessarily disc-shaped elements, and that the abutment means may carry out the function of removing the integument and/or promoting the motion of the internal seed **S** without departing from the scope of protection of the attached claims.

For example, such abutment means may include a plurality of deviation elements positioned in the work areas of the peeler **11.**

According to a preferred but non-exclusive embodiment, the deviation elements may be in the form of one or more wire-like elements suitably positioned in the work areas so as to facilitate the exit of the seeds **S** without the integument **T.**

Furthermore, it is clear that the peeler may comprise disc-shaped elements **111** and/or those **112,** without departing from the scope of protection of the attached claims.

Advantageously, the peeler **11** may also include a plurality of counteracting elements **113** which rotate coaxially around the axis **X‴**, which may be substantially parallel to the axis **X.**

The latter may include a plurality of sequentially peripheral operative portions **1130** interposed between two annular dragging elements **110** and susceptible to come into contact, when in the work area, with the integuments **T** so as to remove them from the working area identified by the respective pair of annular dragging elements **110.**

Being per se wet, the integuments **T** will actually adhere to the work surfaces of the latter more easily.

Preferably, the counteracting elements **113** may be "star-shaped" wherein each tip defines the aforementioned operative portions **1130.**

The presence of the counteracting elements **113** may therefore allow to clean the respective work areas **1110,** therefore preventing them for being dirtied excessively, with the risk of causing malfunctions or jamming

Furthermore, the peeler **11** may be fully motor-driven: for example, there may be provided for a driving roller **115** configured to transmit the motion, for example through belts or chains, to one or more driven rollers **115** and - as a result - to the annular dragging elements **110,** to the disc-shaped elements **111, 112,** to the counteracting elements **113** and to the supply ones **114.**

Advantageously, the decortication step may also be carried out even without using water on the decortication system, actually due to the pretreatment step, with resulting cost-effectiveness. In other words, the peeler **11** may be without means for wetting the incoming legumes **F.**

As clear, even after the decortication step, the decorticated beans **F** consisting of the internal seed **S** alone may be still wet or however they may have a significant moisture level: there may arise the need to dry or dehydrate them so as to allow the storage or possible subsequent treatments.

Therefore, once the decortication step has been completed, there may be provided for a desiccation step or a step of drying the legumes **F** thus decorticated so as to obtain a dry decorticated legume suitable to be stored in appropriate silos or moved towards an appropriate packaging line.

The desiccation step for example may be carried out using a per se known common dryer **50.**

Furthermore, this may be carried out for a predetermined desiccation time comprised between 10 minutes and 30 minutes, preferably between 15 minutes and 25 minutes.

For example, the desiccation time may be 20 minutes.

It is clear that - depending on the design needs - there may also be provided for different desiccation time, without departing from the scope of protection of the attached claims.

Thanks to such desiccation step, the product may return to the standard moisture typical of a dry product.

As deducible in the light of the above, the provided method may therefore prove not only to be easy to implement but also allow to rapidly obtain decorticated legumes starting from very common dry legumes and preserving their organoleptic qualities and inherent qualities.

According to a further inventive aspect of the invention, there may be provided for a line **1** for the decortication of dry oblong legumes **F.**

The line **1** is particularly schematically shown in **FIG. 1****.**

In an entirely equivalent manner, also in this case a batch of dry beans **F** to be decorticated shall be taken as reference, emphasising that the choice aims at facilitating the reading of the present description and therefore non-limiting.

Generally, the line **1** may include one or more containers **10,** each having an inlet **10-I** and an outlet **10-O** and being appropriate to wet the dry beans **F** according to the method mentioned above, and one or more peelers **11,** as described above.

Each peeler **11** may provide for the presence of an inlet **11-I**, with the supply hopper and a vibrating belt **20,** for the beans **F** soaked on the surface to be decorticated and an outlet **11-O**, with the discharge hopper and the conveyor belt **1300,** for the decorticated beans **F.**

Subsequently, should there be provided for several containers **10** and several peelers **11,** may be configured to operate parallel.

In any case, the containers **10** and the peelers **11** may be arranged sequentially, therefore defining an advancement direction **D** of the product to be decorticated from the outlets **10-O** of the containers **10,** operating parallel where needed, up to the inlets **11-I** of the peelers **11.**

According to a first preferred but not exclusive embodiment, the line **1** may include only one container **10** and a peeler **11.**

Subsequently, the line **1** may further include movement means **12** interposed between the container **10** and the peeler **11** so as to allow the movement of the beans from the former to the latter.

The movement means **12** for example may be in the form of one or more conveyor belts **12** configured to connect - along the advancement direction **D** - the outlet **10-O** of the container **10** with the inlet **11-I** of the peeler **11.**

According to a first preferred but not exclusive embodiment, the line **1** may include only one container **10** and a plurality of peelers **11,** for example six, operating parallel to each other.

Similarly, also in this case there can be provided for means **12** for moving the product from the container **10** to the peelers **11** for example in the form of a conveyor belt **11.**

The latter may be configured to move the product along the advancement direction **D** from the outlet **10-O** of the container **10** to the inlets **11-I** of the peelers **11.**

To this end, the conveyor belt **11** may include a plurality of diverter elements **13,** each of which may be positioned at the inlet **11-I** of a peeler **11.**

Furthermore, the diverter elements **13** may be suitable to be controlled electronically through a special data processing logic unit **30,** for example in the form of a PLC, so as to allow to selectively divert the soaked beans coming from the outlet **10-O** from the container **10** and directed towards the respective inlet **11-I** of the peeler **11.**

Possibly, the line **1** may include, at the inlet of the container **10,** suitable means for loading **20** the dry beans **F** to be pre-treated.

The latter may include a first hopper, not particularly shown in the attached figure, for carrying out the preliminary loading of the dry beans **F** to be pre-treated.

Given that the preliminary loading of the beans to be pre-treated is manual, the hopper may be positioned at a first height **Q1,** so as to be accessible to an operator who carries out the operation for loading the dry beans **F.**

The hopper may be subsequently connected with an appropriate elevator **22,** for example a bucket elevator **22,** adapted to lift the dry beans **F** to be pre-treated from the first height **Q1** to a second height **Q2** positioned above the container **10.**

In this case, the loading section of the bucket elevator **22** may define the height **Q1,** while the discharge section may define the height **Q2.**

Therefore, once the dry beans **F** will have reached the discharge section at the height **Q2,** they may be discharged into a second hopper **21.**

Preferably, the latter may be suitably predisposed at the height **Q2** and above the container **10** so as to receive the dry beans **F** to be pre-treated and so as to allow the selective insertion thereof into the container **10.**

The expression selective insertion is used to indicate that the hopper **21** may be suitable to be controlled electronically so as to allow to insert a determined amount of dry beans **F** to be pre-treated at predetermined time instants.

To this end, the hopper **21** may preferably include a solenoid valve **31** which, by way of response to a timed control signal **C** generated by the data processing logic unit **30,** may allow it to discharge a determined amount of dry beans **F** to be pre-treated in the container **10.**

Possibly the line **1** may further include discharge means **40** configured to allow to collect the decorticated beans **F** exiting from one or more peelers **11** to move them towards the subsequent desiccation, storage and packaging steps.

In any case, the discharge means **40** may include one or more conveyor belts operatively connected with one or more exits of the peelers **11** so as to collect the decorticated beans **F** exiting therefrom.

For example, should the peeler **11** be single and with a single exit **11-O**, one conveyor belt will be sufficient.

On the other hand, were there to be six independent peelers **11** which work parallel and positioned in progression along two parallel rows, it will be possible to have a conveyor belt per row or a central conveyor belt adapted to collect the decorticated dry beans **F** exiting from the peelers **11** at the sides thereof.

The one or more discharge conveyor belts may therefore allow to convey the decorticated beans **F** in a further discharge hopper positioned downstream of the line **1.**

Downstream of the line 1, should there also be provided for the presence of a dryer **50,** the hopper may be connected, in a manner entirely similar to the description detailed above, to a further elevator, for example a bucket elevator, so as to allow to lift the decorticated beans **F** up to a further hopper which introduces the decorticated beans into the dryer **50.**

As regards the description outlined above, the line **1** may therefore be particularly efficient and functional.

As a matter of fact, the line **1** allows to rapidly and automatically, or at most semiautomatically, obtain decorticated oblong legumes **F** starting from common oblong legumes **F** having the integument **T.**

Furthermore, it may allow to obtain - with markedly high performance - decorticated oblong legumes that are not damaged or jeopardised during the processing.

Advantageously, this is due to both to the pretreatment and to the decortication carried out by means of one or more peelers **11.**

Therefore, according to a further aspect of the invention, there may be provided for the use of a peeler **11** as described above, to carry out the decortication of oblong legumes soaked on the surface.

Unlike the industrial decorticators known in the prior art, the use of this type of peeler may actually allow to minimise waste index and therefore maximise the final yield of the decortication process, especially for oblong legumes **F,** therefore entailing the absence of an abrasive drum.

There may be provided for a computer program which comprises a plurality of instructions adapted to implement the decortication method presented above.

The computer program may be preferably installed in a special processor, such as for example a data processing logic unit **30** of the line **1.**

Therefore, this will allow to obtain a fully automated line **1** for the decortication of oblong legumes through the decortication method described above.

The invention is susceptible to modifications and variants all falling within the scope of protection outlined in the attached claims. In particular, the elements of the invention can be replaced by other technically equivalent elements.

Furthermore, the materials may be selected depending on the needs, without departing from the scope of protection of the invention, as defined in the claims.

Furthermore, one or more elements of a specific embodiment of the invention technically compatible with another specific embodiment may be introduced into the latter additionally to or to replace elements of the latter, within the scope of the claims.

Should the technical elements specified in the claims be followed by reference signs, such reference signs are included with the sole purpose of improving the intelligibility of the invention and, therefore, they do not entail any limitation to the claimed scope of protection.

## Claims

1. A method for the decortication of dry oblong legumes (**F**) having internal seed (**S**) and external integument (**T**), for example beans, broad beans, lupins or the like, sequentially comprising the steps of:
- pretreatment of said dry oblong legumes (**F**) in a pretreatment liquid at least one predetermined pretreatment temperature and for a predetermined pretreatment time to obtain at least partially soaked oblong legumes (**F**);
- decortication of said at least partially soaked oblong legumes (**F**) to at least partially remove the integument (**T**);
**characterized in that** the decortication step is accomplished by mechanically decorticating said at least partially soaked oblong legumes (**F**) by means of at least one peeler (**11**) so as to obtain decorticated oblong legumes consisting of the internal seed (**S**) alone, said at least one peeler (**11**) comprising at least one pair of annular dragging elements (**110**) which are mutually parallel and rotating around a first axis (**X**), the annular dragging elements (**110**) of each pair being mutually spaced apart by a predetermined distance (**d**) to define a work area **(1110)** susceptible to house at least one of said at least partially soaked oblong legumes (**F**), said predetermined distance (**d**) being such that said at least one pair of annular dragging elements (**110**) interacts with the integument (**T**) of said at least one of said at least partially soaked oblong legumes (**F**) to separate it from the internal seed (**S**).

2. Method according to the preceding claim, wherein said at least one peeler (**11**) comprises conveyor means (**11-I, 20, 21, 21', 210**) for conveying the at least partially soaked oblong legumes (**F**) towards said work area **(1110)** along an advancement direction (**Y**) substantially perpendicular to said first axis (**X**), the internal seed once separated from the integument (**T**) passing through said work area **(1110)** to reach the inner area (**1200**) of said at least one pair of annular dragging elements (**110**).

3. Method according to the preceding claim, wherein said conveying means (**11-I, 20, 21, 21', 210)** include a chute (**21'**) facing towards said work area (**1110**), said chute (**21'**) further preferably comprising guide means (**210**) so that an at least partially soaked oblong legume (**F**) enters into the work area **(1110)** one at a time.

4. Method according to claim 3 or 2, wherein said annular dragging elements (**110**) have an inlet area (**110'**) converging towards said work area **(1110)** so as to facilitate the entry of the oblong legume (**F**) at least partially soaked therein, said annular dragging elements (**110**) further preferably having an outlet area (**110"**) diverging towards said inner area (**1200**) so as to facilitate the exit of the internal seed (**S**) from said annular dragging elements (**110**).

5. Method according to claim 3, 4 or 2, wherein said at least one peeler (**11**) comprises means (**11-O, 1300**) for collecting the decorticated oblong legumes (**F**) arranged at said inner area (**1200**) of said at least one pair of annular dragging elements (**110**) or operatively connected with the latter.

6. Method according to claim 3, 4, 5 or 2, wherein said at least one peeler (**11**) comprises a plurality of pairs of annular dragging elements (**110**) arranged adjacent to each other and coaxially rotating around said first axis (**X**), said first conveying means (**11-I, 20, 21, 21', 210)** comprise a vibrating conveyor belt (**20**) with a plurality of supply channels (**21**) each defining said advancement direction (**Y**) and arranged at a respective pair of annular dragging elements (**110**) so that the at least partially soaked oblong legumes (**F**) which advance in a row along said supply channels (**21**) enter into the work area **(1110)** of the respective pair of annular dragging elements (**110**).

7. Method according to one or more of the preceding claims, wherein said at least one peeler (**11**) includes abutment means (**111, 112**) configured to interact with the at least one at least partially soaked oblong legume (**F**) dragged by said annular dragging elements (**110**) in said work area (**1110**), so as to promote the mutual separation of said integument (**T**) and of said internal seed (**S**) and/or the exit of the latter from said work area (**1110**).

8. Method according to the preceding claim, wherein said abutment means (**111, 112**) include at least one first disc-shaped element (**111**) rotating around a second axis (**X'**) substantially parallel to said first axis (**X**) and configured to interact with said at least one pair of annular dragging elements (**110**) for promoting the mutual separation of said integument (**T**) and of said internal seed (**S**).

9. Method according to claim 8 or 7, wherein said at least one peeler (**11**) includes at least one second disc-shaped element (**112**) rotating around a third axis (**X"**) substantially parallel to said first axis (**X**) and configured to interact with said at least one pair of annular dragging elements (**110**) to allow the exit of said internal seed (**S**) from said work area.

10. Method according to one or more of claims 1 to 9, wherein said peeler (**11**) includes at least one counteracting element (**113**) rotating around a fourth axis (**X‴**) substantially parallel to said first axis (**X**) with a plurality of operative portions (**1130**) susceptible to sequentially come into contact with the integuments (**T**) of the at least partially soaked oblong legumes (**F**) to allow the removal of said integuments (**T**) from said annular dragging elements (**110**).

11. Method according to any one of the preceding claims, wherein said pretreatment step is carried out inside at least one container (**10**) suitably sized and configured to be filled with a suitable amount of said pretreatment liquid, said method further including a step of inserting said dry oblong legumes (**F**) into said at least one container (**10**), the latter being carried out previously to said pretreatment step.

12. Method according to the preceding claim, further comprising a step of filling said at least one container (**10**) with said pretreatment liquid at room temperature and a step of heating said at least one container to bring said pretreatment liquid to said pretreatment temperature, said filling and heating steps being carried out sequentially and previously to said step of inserting said dry oblong legumes (**F**) into said at least one container.

13. A line (**1**) for the automatic or semi-automatic decortication of dry oblong legumes (**F**), for example beans, broad beans, lupins or the like, by means of the method according to one or more of the preceding claims, consecutively comprising at least one container (**10**) and at least one peeler (**11**), the latter being operatively connected by means of suitable handling means (**12**) interposed therein and adapted to allow the movement of said soaked oblong legumes (**F**) from said at least one container (**10**) to said at least one peeler (**11**) to allow the mechanical decortication thereof so as to obtain decorticated oblong legumes consisting of the internal seed (**S**) alone, **characterized in that** said at least one peeler (**11**) comprises at least one pair of annular dragging elements (**110**) which are mutually parallel and rotating around a first axis (**X**), the annular dragging elements (**110**) of each pair being mutually spaced apart by a predetermined distance (**d**) to define a work area (**1110**) susceptible to house at least one of said at least partially soaked oblong legumes (**F**), said predetermined distance (**d**) being such that said at least one pair of annular dragging elements (**110**) interacts with the integument (**T**) of said at least one of said at least partially soaked oblong legumes (**F**) to separate it from the internal seed (**S**).

14. The use of a peeler (**11**) for decorticating at least partially soaked oblong legumes (**F**), the latter having an at least partially soaked integument (**T**) and a substantially dry seed (**S**), wherein the peeler (**11**) comprises at least one pair of annular dragging elements (**110**) rotating around a first axis (**X**) and two by two mutually spaced apart by a predetermined distance (**d**) to define a work area **(1110)** susceptible to house at least one of said at least partially soaked oblong legumes (**F**), said peeler (**11**) further comprising abutment means (**111, 112**) configured to interact with said at least one of said at least partially soaked oblong legumes (**F**) dragged by said annular dragging elements (**110**) in said work area (**1110**), so as to promote the mutual separation of said integument (**T**) and of said dry seed (**S**) and/or the exit of the latter from said work area (**1110**).

## Patentansprüche

1. Verfahren zum Schälen von trockenen länglichen Hülsenfrüchten (F) mit innerer Saat (S) und einer äußeren Haut (T), beispielsweise Bohnen, Dicke Bohnen, Lupine oder dergleichen, umfassend der Reihe nach folgende Schritte:
- Vorbehandlung der trockenen länglichen Hülsenfrüchte (F) in einer Vorbehandlungsflüssigkeit bei wenigstens einer Vorbehandlungstemperatur und über eine bestimmte Vorbehandlungszeit, um wenigstens teilweise getränkte längliche Hülsenfrüchte (F) zu erhalten;
- Schälen der wenigstens teilweise getränkten länglichen Hülsenfrüchte (F), um wenigstens teilweise die Haut (T) zu entfernen;
**dadurch gekennzeichnet, dass** der Schäl Schritt durch mechanisches Schälen der wenigstens teilweise getränkten länglichen Hülsenfrüchte (F) mittels wenigstens einer Schäleinrichtung (11) durchgeführt wird, um geschälte längliche Hülsenfrüchte zu erhalten, die nur aus der inneren Saat (S) bestehen, wobei die wenigstens eine Schäleinrichtung (11) wenigstens ein Paar ringförmiger Ziehelemente (110) umfasst, die zueinander parallel angeordnet sind und sich um eine erste Achse (X) drehen, wobei die ringförmigen Ziehelemente (110) jedes Paars voneinander mit einem bestimmten Abstand (d) voneinander beabstandet sind, um einen Arbeitsbereich (1110) zu definieren, der dazu ausgebildet ist, wenigstens eine der wenigstens teilweise getränkten länglichen Hülsenfrüchte (F) aufzunehmen, wobei der vorbestimmte Abstand (d) so gewählt ist, dass wenigstens ein Paar ringförmiger Ziehelemente (110) mit der Haut (T) von wenigstens einem der wenigstens teilweise getränkten länglichen Hülsenfrüchte (F) zusammenwirkt, um diese von der inneren Saat (S) zu trennen.

2. Verfahren nach dem vorhergehenden Anspruch, bei welchem die wenigstens eine Schäleinrichtung (11) Fördermittel (11-1, 20, 21, 21', 210) zur Förderung der wenigstens teilweise getränkten länglichen Hülsenfrüchte (F) in Richtung auf den Arbeitsbereich (1110) entlang einer Vorschubrichtung (Y) umfasst, die im Wesentlichen senkrecht zu der ersten Achse (X) ist, wobei die innere Saat, wenn diese von der Haut (T) getrennt ist, durch den Arbeitsbereich (1110) hindurch geführt wird, um in einen inneren Bereich (1200) des wenigstens einen Paars ringförmiger Ziehelemente (110) zu gelangen.

3. Verfahren nach dem vorhergehenden Anspruch, bei welchem die Fördermittel (11-1, 20, 21, 21', 210) eine Rinne (21') umfassen, die in Richtung auf den Arbeitsbereich (1110) ausgerichtet ist, wobei die Rinne (21') weiterhin vorzugsweise Führungsmittel (210) umfasst, sodass jeweils wenigstens eine nach der anderen teilweise getränkte längliche Hülsenfrucht (F) in den Arbeitsbereich (1110) gelangt.

4. Verfahren nach einem der Ansprüche 3 oder 2, bei welchem die ringförmigen Ziehelemente (110) einen Einlassbereich (110') umfassen, der sich in Richtung des Arbeitsbereichs (1110) verengt, um den Eintritt der wenigstens teilweise getränkten länglichen Hülsenfrüchte (F) in diesen zu erleichtern, wobei die ringförmigen Ziehelemente (110) weiterhin bevorzugt einen Auslassbereich (110") umfassen, der sich in Richtung auf den inneren Bereich (1200) aufweitet, um den Austritt der inneren Saat (S) aus den ringförmigen Zielelementen (110) zu erleichtern.

5. Verfahren nach einem der Ansprüche 3, 4 oder 2, bei welchem die wenigstens eine Schäleinrichtung (11) Mittel (11-0, 1300) zum Sammeln der geschälten länglichen Hülsenfrüchte (F) umfasst, die in dem inneren Bereich (1200) des wenigstens einen Paars ringförmiger Ziehelemente (110) angeordnet sind oder mit Letzteren in Wirkverbindung stehen.

6. Verfahren nach einem der Ansprüche 3, 4, 5 oder 2, bei welchem die wenigstens eine Schäleinrichtung (11) eine Vielzahl von Paaren ringförmiger Zielelemente (110) umfasst, die benachbart zueinander angeordnet sind und sich koaxial um die erste Achse (X) drehen, wobei die ersten Fördermittel (11-1, 20, 21, 21', 210) einen vibrierenden Fördergurt (20) mit einer Vielzahl von Zufuhrkanälen (21) umfassen, die jeweils die Vorschubrichtung (Y) definieren und jeweils an einem Paar ringförmiger Ziehelemente (110) angeordnet sind, sodass die wenigstens teilweise getränkten länglichen Hülsenfrüchte (F), die in einer Reihe entlang der Zufuhrkanäle (21) gefördert werden, in den Arbeitsbereich (1110) des jeweiligen Paars der ringförmigen Ziehelemente (110) eintreten.

7. Verfahren nach einem oder mehreren der vorstehenden Ansprüche, wobei die wenigstens eine Schäleinrichtung (11) Anschlagmittel (111, 112) umfasst, die dazu ausgebildet sind, mit wenigstens einer wenigstens teilweise getränkten länglichen Hülsenfrucht (F), die durch die ringförmigen Ziehelemente (110) in den Arbeitsbereich (1110) eingezogen wird, zusammenzuwirken, um so eine gegenseitige Trennung der Haut (T) und der inneren Saat (S) und/oder den Austritt der Letzteren aus dem Arbeitsbereich (1110) zu bewirken.

8. Verfahren nach dem vorhergehenden Anspruch, bei welchem die Anschlagmittel (111, 112) wenigstens ein scheibenförmiges Element (111) umfassen, dass sich um eine zweite Achse (X') dreht, die sich im Wesentlichen parallel zu der ersten Achse (X) erstreckt und das dazu ausgebildet ist, mit dem wenigstens einem Paar der ringförmigen Zierelemente (110) zusammenzuwirken, um die Trennung der Haut (T) und der inneren Saat (S) zu bewirken.

9. Verfahren nach Anspruch 8 oder 7, bei welchem die wenigstens eine Schäleinrichtung (11) wenigstens ein zweites scheibenförmiges Element (112) umfasst, das sich um eine dritte Achse (X") dreht, die sich im Wesentlichen parallel zu der ersten Achse (X) erstreckt und die dazu ausgebildet ist, mit dem wenigstens einen Paar ringförmiger Ziehelemente (110) zusammenzuwirken, um den Austritt der inneren Saat (S) aus dem Arbeitsbereich zu ermöglichen.

10. Verfahren nach einem oder mehrerer der Ansprüche 1 bis 9, bei welchem die Schäleinrichtung (11) wenigstens ein gegenwirkendes Element (113) umfasst, das sich um eine vierte Achse (X‴) dreht, die sich im Wesentlichen parallel zu der ersten Achse (X) erstreckt, mit einer Vielzahl von Arbeitsteilen (1130), die dazu ausgebildet ist, nacheinander mit der Haut (T) der wenigstens einen getränkten länglichen Hülsenfrucht (F) in Berührung zu gelangen, und das Entfernen der Haut (T) aus den ringförmigen Ziehelementen (110) zu ermöglichen.

11. Verfahren nach einem der vorstehenden Ansprüche, bei welchem der Vorbehandlungsschritt innerhalb wenigstens eines Behälters (10) durchgeführt wird, der entsprechend bemessen ist und der dazu ausgebildet ist mit einer geeigneten Menge der Vorbehandlungsflüssigkeit gefüllt zu werden, wobei das Verfahren weiterhin den Schritt des Einführens der trockenen länglichen Hülsenfrüchte (F) in den wenigstens einen Behälter (10) umfasst, wobei letzterer Schritt vor dem Vorbehandlungsschritt durchgeführt wird.

12. Verfahren nach dem vorhergehenden Anspruch, weiterhin umfassend einen Schritt der Befüllung des wenigstens einen Behälters (10) mit der Vorbehandlungsflüssigkeit bei Raumtemperatur und einen Schritt des Aufheizens des wenigstens einen Behälters, um die Vorbehandlungsflüssigkeit auf die Vorbehandlungstemperatur zu bringen, wobei die Schritte des Befüllens und Aufheizens der Reihe nach und vor dem Schritt des Einbringens der trockenen länglichen Hülsenfrüchte (F) in den wenigstens einen Behälter durchgeführt werden.

13. Linie (1) zum automatischen oder halbautomatischen Schälen von trockenen länglichen Hülsenfrüchten (F), beispielsweise Bohnen, Dicke Bohnen, Lupine oder dergleichen, mittels des Verfahrens nach einem oder mehreren der vorhergehenden Ansprüche, aufeinanderfolgend umfassend wenigstens einen Behälter (10) und wenigstens eine Schäleinrichtung (11), wobei Letztere in Wirkverbindung mit geeigneten Handhabungsmitteln (12) ist, die dazwischen angeordnet sind und die dazu ausgebildet sind, die Bewegung der getränkten länglichen Hülsenfrüchte (F) aus dem wenigstens einen Behälter (10) zu der wenigstens einen Schälvorrichtung (11) zu ermöglichen, um das mechanische Schälen derselben zu erlauben, um geschälte längliche Hülsenfrüchte zu erhalten, die nur aus der inneren Saat (S) bestehen, **dadurch gekennzeichnet, dass** die wenigstens eine Schäleinrichtung (11) wenigstens ein Paar ringförmiger Ziehelemente (110) umfasst, die zueinander parallel sind und sich um eine erste Achse (X) drehen, wobei die ringförmigen Ziehelemente (110) jedes Paars um einen vorbestimmten Abstand (d) voneinander beabstandet sind, um einen Arbeitsbereich (1110) zu definieren, der dazu ausgebildet ist, wenigstens eine der wenigstens teilweise getränkten länglichen Hülsenfrüchte (F) aufzunehmen, wobei der vorbestimmte Abstand (d) so bemessen ist, dass das wenigstens eine Paar ringförmiger Ziehelemente (110) mit der Haut (T) der wenigstens teilweise getränkten länglichen Hülsenfrucht (F) zusammenwirkt, um diese von der inneren Saat (S) zu trennen.

14. Verwendung einer Schäleinrichtung (11) zum Schälen von wenigstens teilweise getränkten länglichen Hülsenfrüchten (F), wobei Letztere eine wenigstens teilweise getränkte Haut (T) und eine im wesentlichen trockene Saat (S) umfassen, wobei die Schäleinrichtung (11) wenigstens ein Paar ringförmiger Ziehelemente (110) umfasst, die sich um eine erste Achse (X) drehen und die jeweils paarweise gegenseitig mit einem vorbestimmten Abstand (d) voneinander beabstandet sind, um einen Arbeitsbereich (1110) zu definieren, der dazu ausgebildet ist, wenigstens eine der wenigstens teilweise getränkten länglichen Hülsenfrüchte (F) aufzunehmen, wobei die Schäleinrichtung weiterhin Anschlagmittel (111, 112) umfasst, die dazu ausgebildet sind, mit wenigstens einer der wenigstens teilweise getränkten länglichen Hülsenfrüchte zusammenzuwirken, die durch die länglichen Ziehelemente (110) in den Arbeitsbereich (1110) hineingezogen werden, um so die gegenseitige Trennung der Haut (T) und der trockenen Saat (S) und/oder den Austritt der Letzteren aus dem Arbeitsbereich (1110) zu bewirken.

## Revendications

1. Un procédé pour la décortication de légumineuses oblongues (F) sèches ayant une graine interne (S) et un tégument externe (T), par exemple des haricots, des fèves, des lupins ou similaires, comprenant de manière séquentielle les étapes suivantes :
- le prétraitement desdites légumineuses oblongues (F) sèches dans un liquide de prétraitement à au moins une température de prétraitement prédéterminée et pendant un temps de prétraitement prédéterminé pour obtenir des légumineuses oblongues (F) au moins partiellement trempées ;
- la décortication desdites légumineuses oblongues (F) au moins partiellement trempées pour supprimer au moins partiellement le tégument (T) ;
**caractérisé en ce que** l'étape de décortication est accomplie par décortication de manière mécanique desdites légumineuses oblongues (F) au moins partiellement trempées à l'aide d'au moins un dispositif d'épluchage (11) de manière à obtenir des légumineuses oblongues décortiquées se composant de la graine interne (S) seule, ledit au moins un dispositif d'épluchage (11) comprenant au moins une paire d'éléments de glissement annulaires (110) qui sont mutuellement parallèles et tournant autour d'un premier axe (X), les éléments de glissement annulaires (110) de chaque paire étant mutuellement espacés d'une distance prédéterminée (d) pour définir une zone de travail (1110) susceptible d'héberger au moins une desdites légumineuses oblongues (F) au moins partiellement trempées, ladite distance prédéterminée (d) étant de sorte que ladite au moins une paire d'éléments de glissement annulaires (110) interagit avec le tégument (T) desdites au moins une desdites légumineuses oblongues (F) au moins partiellement trempées pour le séparer de la graine interne (S).

2. Procédé selon la revendication précédente, dans lequel ledit au moins un dispositif d'épluchage (11) comprend des moyens d'acheminement (11-I, 20, 21, 21', 210) pour acheminer les légumineuses oblongues (F) au moins partiellement trempées vers ladite zone de travail (1110) le long d'une direction d'avancement (Y) sensiblement perpendiculaire audit premier axe (X), la graine interne une fois séparée du tégument (T) traversant ladite zone de travail (1110) pour atteindre la zone interne (1200) de ladite au moins une paire d'éléments de glissement annulaires (110).

3. Procédé selon la revendication précédente, dans lequel lesdits moyens d'acheminement (11-I, 20, 21, 21', 210) comprennent une goulotte (21') orientée vers ladite zone de travail (1110), ladite goulotte (21') comprenant en outre de préférence des moyens de guidage (210) de sorte qu'une légumineuse oblongue (F) au moins partiellement trempée entre dans la zone de travail (1110) une à la fois.

4. Procédé selon la revendication 3 ou 2, dans lequel lesdits éléments de glissement annulaires (110) ont une zone d'entrée (110') convergeant vers ladite zone de travail (1110) de manière à faciliter l'entrée de la légumineuse oblongue (F) au moins partiellement trempée à l'intérieur, lesdits éléments de glissement annulaires (110) ayant en outre de préférence une zone de sortie (110") divergeant vers ladite zone interne (1200) de manière à faciliter la sortie de la graine interne (S) desdits éléments de glissement annulaires (110).

5. Procédé selon la revendication 3, 4 ou 2, dans lequel ledit au moins un dispositif d'épluchage (11) comprend des moyens (11-O, 1300) de collecter les légumineuses oblongues (F) décortiquées disposées au niveau de ladite zone interne (1200) de ladite au moins une paire d'éléments de glissement annulaires (110) ou reliées de manière opérationnelle à ces derniers.

6. Procédé selon la revendication 3, 4, 5 ou 2, dans lequel ledit au moins un dispositif d'épluchage (11) comprend une pluralité de paires d'éléments de glissement annulaires (110) agencés de manière adjacente les uns par rapport autres et tournant de manière coaxiale autour dudit premier axe (X), lesdits premiers moyens d'acheminement (11-I, 20, 21, 21', 210) comprennent une bande transporteuse vibrante (20) ayant une pluralité de canaux d'alimentation (21) définissant chacun ladite direction d'avancement (Y) et agencés au niveau d'une paire respective d'éléments de glissement annulaires (110) de sorte que les légumineuses oblongues (F) au moins partiellement trempées qui avancent en rangée le long desdits canaux d'alimentation (21) entrent dans la zone de travail (1110) de la paire respective d'éléments de glissement annulaires (110).

7. Procédé selon une ou plusieurs des revendications précédentes, dans lequel ledit au moins un dispositif d'épluchage (11) comprend des moyens de butée (111, 112) configurés pour interagir avec l'au moins une légumineuse oblongue (F) au moins partiellement trempée glissée par lesdits éléments de glissement annulaires (110) dans ladite zone de travail (1110) de manière à favoriser la séparation mutuelle dudit tégument (T) et de ladite graine interne (S) et/ou la sortie de cette dernière de ladite zone de travail (1110).

8. Procédé selon la revendication précédente, dans lequel lesdits moyens de butée (111, 112) comprennent au moins un premier élément en forme de disque (111) tournant autour d'un deuxième axe (X') sensiblement parallèle audit premier axe (X) et configuré pour interagir avec ladite au moins une paire d'éléments de glissement annulaires (110) pour favoriser la séparation mutuelle dudit tégument (T) et de ladite graine interne (S).

9. Procédé selon la revendication 8 ou 7, dans lequel ledit au moins un dispositif d'épluchage (11) comprend au moins un deuxième élément en forme de disque (112) tournant autour d'un troisième axe (X") sensiblement parallèle audit premier axe (X) et configuré pour interagir avec ladite au moins une paire d'éléments de glissement annulaires (110) pour permettre la sortie de ladite graine interne (S) de ladite zone de travail.

10. Procédé selon une ou plusieurs des revendications 1 à 9, dans lequel ledit dispositif d'épluchage (11) comprend au moins un élément de neutralisation (113) tournant autour d'un quatrième axe (X‴) sensiblement parallèle audit premier axe (X) avec une pluralité de parties opérationnelles (1130) susceptibles d'entrer en contact de manière séquentielle avec les téguments (T) des légumineuses oblongues (F) au moins partiellement trempées pour permettre la suppression desdits téguments (T) desdits éléments de glissement annulaires (110).

11. Procédé selon l'une quelconque des revendications précédentes, dans lequel ladite étape de prétraitement est mise en œuvre à l'intérieur d'au moins un conteneur (10) dimensionné de manière appropriée et conçu pour être rempli d'une quantité appropriée dudit liquide de prétraitement, ledit procédé comprenant en outre une étape d'insertion desdites légumineuses oblongues (F) sèches dans ledit au moins un conteneur (10), ce dernier étant mis en œuvre préalablement à ladite étape de prétraitement.

12. Procédé selon la revendication précédente, comprenant en outre une étape de remplissage dudit au moins un conteneur (10) dudit liquide de prétraitement à température ambiante et une étape de chauffage dudit au moins un conteneur pour amener ledit liquide de prétraitement à ladite température de prétraitement, lesdites étapes de remplissage et de chauffage étant mises en œuvre de manière séquentielle et préalablement à ladite étape d'insertion desdites légumineuses oblongues (F) sèches dans ledit au moins un conteneur.

13. Une ligne (1) pour la décortication automatique ou semi-automatique de légumineuses oblongues (F) sèches, par exemple des haricots, des fèves, des lupins ou similaires, au moyen du procédé selon une ou plusieurs des revendications précédentes, comprenant de manière consécutive au moins un conteneur (10) et au moins un dispositif d'épluchage (11), ce dernier étant relié de manière opérationnelle au moyen de moyens de manipulation appropriés (12) interposés dans celui-ci et adaptés pour permettre le mouvement desdites légumineuses oblongues (F) sèches dudit au moins un conteneur (10) audit au moins un dispositif d'épluchage (11) pour permettre la décortication mécanique de celui-ci de manière à obtenir des légumineuses oblongues décortiquées consistant en la graine interne (S) seule, **caractérisé en ce que** ledit au moins un dispositif d'épluchage (11) comprend au moins une paire d'éléments de glissement annulaires (110) qui sont mutuellement parallèles et tournant autour d'un premier axe (X), les éléments de glissement annulaires (110) de chaque paire étant mutuellement espacés d'une distance prédéterminée (d) pour définir une zone de travail (1110) susceptible d'héberger au moins une desdites légumineuses oblongues (F) au moins partiellement trempées, ladite distance prédéterminée (d) étant de sorte que ladite au moins une paire d'éléments de glissement annulaires (110) interagit avec le tégument (T) desdites au moins une desdites légumineuses oblongues (F) au moins partiellement trempées pour le séparer de la graine interne (S).

14. L'utilisation d'un dispositif d'épluchage (11) pour décortiquer des légumineuses oblongues (F) au moins partiellement trempées, ces dernières ayant au moins un tégument (T) partiellement trempé et une graine (S) sensiblement sèche, dans lequel le dispositif d'épluchage (11) comprend au moins une paire d'éléments de glissement annulaires (110) tournant autour d'un premier axe (X) et mutuellement espacés deux par deux d'une distance prédéterminée (d) pour définir une zone de travail (1110) susceptible d'héberger au moins une desdites légumineuses oblongues (F) au moins partiellement trempées, ledit dispositif d'épluchage (11) comprenant en outre des moyens de butée (111, 112) configurés pour interagir avec lesdites au moins une desdites légumineuses oblongues (F) au moins partiellement trempées glissées par lesdits éléments de glissement annulaires (110) dans ladite zone de travail (1110), de manière à favoriser la séparation mutuelle dudit tégument (T) et de ladite graine sèche (S) et/ou la sortie de cette dernière de ladite zone de travail (1110).
